# FASCICULE DE BREVET EUROPEEN

(11) **EP 4 377 167 B1**
(45) Date de publication et mention de la délivrance du brevet: **09.09.2026**
(21) Numéro de dépôt: 22754444.2
(22) Date de dépôt: 29.07.2022
(51) Int. Cl.: B60S 1/48, B60S 1/52

(54) **BALAI D'ESSUYAGE POUR UN DISPOSITIF D'ESSUYAGE D'UNE SURFACE VITRÉE D'UN VÉHICULE, NOTAMMENT AUTOMOBILE**
WISCHER FÜR EINE VORRICHTUNG ZUM WISCHEN EINER SCHEIBE EINES FAHRZEUGS, INSBESONDERE EINES KRAFTFAHRZEUGS
WIPER FOR A DEVICE FOR WIPING A GLAZED SURFACE OF A VEHICLE, IN PARTICULAR A MOTOR VEHICLE

(30) Priorité: 30.07.2021 FR 2108348; 30.07.2021 FR 2108355
(43) Date de publication de la demande: 05.06.2024
(73) Titulaire: VALEO SYSTEMES D'ESSUYAGE, 78322 Le Mesnil Saint Denis (FR)
(72) Inventeur: IZABEL, Vincent, 78322 LE MESNIL SAINT DENIS (FR); GIRAUD, Frederic, 78322 LE MESNIL SAINT DENIS (FR); CAILLOT, Gerald, 78322 LE MESNIL SAINT DENIS (FR); FILLOUX, Alexandre, 78322 LE MESNIL SAINT DENIS (FR); JARASSON, Jean Michel, 78322 LE MESNIL SAINT DENIS (FR)
(74) Mandataire: Valeo Visibility
(86) Numéro de dépôt international: PCT/EP2022/071468
(87) Numéro de publication internationale: WO 2023/007012

(56) Documents cités:
- DE-A1- 102018 251 717
- US-A1- 2015 143 655

## Description

La présente invention se rapporte au domaine des dispositifs d'essuyage de véhicules, notamment automobile. Plus particulièrement, l'invention concerne un dispositif d'essuyage configuré pour projeter un fluide de nettoyage à la fois sur une zone de visibilité d'une surface vitrée du véhicule et sur une portion du véhicule agencée en dehors de ladite surface vitrée.

La visibilité au travers des surfaces vitrées d'un véhicule est un élément essentiel pour qu'un utilisateur puisse conduire en toute sécurité le véhicule. Selon les conditions environnementales, ces surfaces vitrées s'encrassent plus ou moins vite avec pour conséquence une dégradation de la visibilité au travers de ces surfaces vitrées.

Afin de nettoyer au moins en partie les surfaces vitrées encrassées, le véhicule dispose d'au moins un dispositif d'essuyage, associé à une des surfaces vitrées du véhicule, qui peut comprendre un ou plusieurs balais d'essuyage en contact avec les surfaces vitrées. Les balais d'essuyage sont entraînés en rotation en un mouvement de va-et-vient entre une position d'origine et une position de fin de course qui est généralement en regard d'un montant de baie de la surface vitrée. La surface parcourue par le ou les balais d'essuyage entre la position d'origine et la position de fin de course est aussi appelée zone de visibilité, cette zone de visibilité consistant en la partie de la surface vitrée qu'il convient réglementairement de garder propre.

Par ailleurs, les véhicules comprennent de plus en plus de systèmes d'aide à la conduite du véhicule et donc de capteurs associés à ces systèmes. A titre d'exemple, les systèmes d'aide à la conduite peuvent notamment consister en des systèmes d'aide à la marche arrière, des systèmes de régulation de distance inter-véhicules, des systèmes de détection des panneaux de signalisation, des systèmes d'avertissement d'angle mort, etc.... Ces capteurs sont disposés sur et dans le véhicule en fonction du système d'aide à la conduite concerné. Par exemple ils peuvent être agencés dans ou derrière la surface vitrée du véhicule, au niveau de la zone de visibilité et leur décrassage peut être alors réalisé par le dispositif d'essuyage.

Des capteurs peuvent aussi être disposés au niveau du montant de baie du véhicule. A titre d'exemple, ces capteurs peuvent être des caméras qui filment la portion de route cachée du conducteur par la présence d'un montant de baie, les images acquises pouvant alors être projetées sur une face interne du montant de baie concerné ou bien traitées pour envoyer une alerte en cas de détection d'un obstacle dans l'angle mort. Ces capteurs sont alors totalement hors de portée du dispositif d'essuyage quand bien même le balai d'essuyage se déplace jusqu'à la position de fin de course en regard du montant de baie. Le lavage des capteurs ainsi disposés impose alors d'avoir un système de nettoyage dédié à chaque capteur. A titre d'exemple, un dispositif de lavage par projection d'air peut être disposé au voisinage du capteur et être actionné à intervalle régulier et/ou dès lors que trop de saletés sont détectés sur le capteur.

Des dispositifs d'essuyage de véhicules connus sont décrits dans les documents US2015/143655 et DE102018251717.

Cette solution présente l'inconvénient de multiplier le nombre de système de nettoyage à implanter dans un véhicule et d'augmenter le coût de revient des systèmes d'aide à la conduite.

Un autre inconvénient est la nécessité d'avoir une alimentation en fluide de nettoyage pour chacun des systèmes de nettoyage. Il faut alors créer un système de canalisations complexes et gérer notamment les pertes de charge au sein des dites canalisations.

La présente invention a pour but de palier au moins un des inconvénients précités et de conduire en outre à d'autres avantages en proposant un nouveau type de dispositif d'essuyage pour véhicule notamment automobile.

L'invention porte sur un balai d'essuyage comportant un corps de balai s'étendant le long d'une direction d'allongement longitudinal du balai d'essuyage et une lame d'essuyage portée par le corps de balai et configurée pour nettoyer une zone de visibilité d'une surface vitrée pour véhicule, notamment automobile, le corps de balai comprenant :
- un canal de circulation du fluide de nettoyage apte à être reliée à un dispositif d'alimentation en fluide de nettoyage du balai d'essuyage, et
- au moins un orifice de projection en communication fluidique avec le canal de circulation et configurée pour projeter le fluide de nettoyage dans la zone de visibilité,
- au moins un élément de projection additionnel configuré pour projeter le fluide de nettoyage dans une zone additionnelle distincte de la zone de visibilité de sorte à pouvoir nettoyer un élément agencé hors de la zone de visibilité,
l'au moins un élément de projection additionnel est en communication fluidique le même canal de circulation et est configuré pour être alimenté en fluide de nettoyage via le canal de circulation.

Le canal de circulation du fluide de nettoyage peut être délimité par une portion tubulaire du corps de balai. Le canal de circulation est apte à être reliée au dispositif d'alimentation en fluide de nettoyage du balai d'essuyage de sorte à convoyer le fluide depuis le dispositif d'alimentation jusqu'à l'au moins un orifice de projection et jusqu'à l'au moins un élément de projection additionnel.

L'au moins un orifice de projection peut être formé dans la portion tubulaire.

On comprend que l'au moins un orifice de projection débouche dans le canal de circulation.

On comprend que l'au moins un élément de projection additionnel présentant une orientation définie par rapport à un axe ou plan spécifique du balai d'essuyage qui est différente d'une orientation de l'au moins un orifice de projection.

L'au moins un orifice de projection ainsi que l'élément de projection additionnel peuvent consister des trous percés dans le corps de balai, et délimités par de la matière constituant le corps du balai.

Par exemple, le corps de balai comprend une série d'orifices de projection, dont l'au moins un orifice de projection. La série d'orifice de projection est configurée pour projeter le fluide de nettoyage dans la zone de visibilité.

Les orifices de projection sont configurés pour présenter une orientation sensiblement équivalente d'un orifice de projection à l'autre, une orientation moyenne des orifices de projection étant définie par rapport à un axe ou un plan spécifique du balai d'essuyage.

Les orifices de projection forment un dispositif d'essuyage embarqué sur le balai, qui permet une projection de fluide qui suit le mouvement du balai, tel qu'il peut être par exemple connu sous la marque Aquablade, et le ou les éléments de projection additionnels sont spécifiques de l'invention en ce qu'ils proposent des deuxièmes moyens de projection différents des orifices de projection pour générer une projection spécifique de fluide de nettoyage.

L'orientation de d'au moins un orifice de projection est définie par un axe d'allongement passant par le centre de la section de passage à la jonction de l'orifice de projection et du canal de circulation et par le centre de la section de passage à la jonction entre l'orifice de projection et la surface externe du corps de balai. Cet axe d'allongement peut notamment être un axe de révolution de l'orifice correspondant.

Les axes d'allongement de chacun des orifices de projection de la série d'orifices de projection sont sensiblement parallèles entres eux et non confondus. On définit une orientation moyenne, ou axe d'allongement moyen, des orifices de projection pour tenir compte d'un éventuel écart de quelques degrés ou dixièmes de degrés qu'il pourrait y avoir par rapport au parallélisme d'un axe d'allongement d'orifice de projection à l'autre du fait de tolérances de fabrication.

Les orifices de projection sont disposés sur le canal de circulation et sont configurés pour que du fluide de nettoyage circulant dans ce canal d'alimentation sortent simultanément par chacun des orifices de projection de la série d'orifices de projection pour arroser la zone de visibilité sur tout ou partie de la dimension longitudinale du balai.

L'axe d'allongement de l'au moins un éléments de projection additionnel peut être défini de manière équivalente à ce qui a été décrit pour l'au moins un orifice de projection et l'axe d'allongement de chaque élément de projection est particulier en qu'il présente une orientation qui diffère de l'orientation moyenne des axes d'allongement des orifices de projection. En d'autres termes, le fluide de nettoyage qui sort d'un élément de projection additionnel présente une direction principale d'éjection qui est différente de celle que prend le fluide de nettoyage lorsqu'il sort d'un orifice de projection de la série d'orifices de projection.

On comprend dans ce contexte que le balai d'essuyage peut projeter un fluide de nettoyage dans la zone de visibilité, via l'au moins un orifice de projection de la et hors de la zone de visibilité, via l'au moins un élément de projection additionnels.

Selon un mode de réalisation, le corps de balai comprend un déflecteur monté sur la lame d'essuyage et au moins un embout agencé à l'une des extrémités longitudinales du déflecteur de sorte à maintenir ensemble l'élément de déflexion d'air et la lame d'essuyage. Par exemple, le corps de balai comprend deux embouts agencés chacun à l'une ou l'autre des extrémités longitudinales du déflecteur. Ainsi, la lame d'essuyage est bloquée en position le long de l'axe longitudinal du balai d'essuyage. On comprend que le déflecteur et les embouts sont à considérer comme des pièces distinctes.

Par exemple, l'au moins un orifice de projection et l'au moins un élément de projection additionnel sont formés dans le déflecteur. Par exemple, l'au moins un embout est dépourvu d'orifice de projection et d'élément de projection additionnel.

Selon une caractéristique de l'invention, le canal de circulation est formé dans le déflecteur. On comprend que selon ce mode de réalisation, l'ensemble des composants permettant la circulation et la projection de fluide sont formés dans le déflecteur.

Par exemple, au moins l'au moins un orifice de projection et/ou l'au moins un élément de projection additionnel est/sont formés(s) dans l'au moins un embout.

Par exemple, l'au moins un élément de projection additionnel est formé dans l'embout formant l'extrémité longitudinale du corps de balai destinée à être du côté haut du pare-brise.

Selon une caractéristique de l'invention, le déflecteur comprend un élément de déflexion d'air et un support de lame d'essuyage.

Le canal de circulation l'au moins un orifice de projection et/ou l'au moins un élément de projection additionnel peuvent être formés dans le support.

Le support de lame d'essuyage peut notamment être configuré pour supporter la lame d'essuyage, et peut comporter en outre des logements de réception d'une ou plusieurs vertèbres de rigidification.

On comprend que selon ce mode de réalisation, tout ou partie des composants permettant la circulation et la projection de fluide peuvent être formés dans le support de lame d'essuyage.

Selon une caractéristique de l'invention, l'orientation moyenne de l'au moins un orifice de projection diffère de l'orientation de l'au moins un élément de projection additionnel vu en projection dans un plan sensiblement perpendiculaire à la direction d'allongement longitudinal du balai d'essuyage, c'est-à-dire dans un plan de coupe du balai longitudinal et transversal. En d'autres termes, l'orientation verticale de l'élément de projection additionnel diffère de l'orientation verticale de l'au moins un orifice de projection, de manière à projeter, pour une position donnée du corps du balai, le fluide de nettoyage à des distances différentes. Plus particulièrement, l'orientation verticale de l'élément de projection additionnel forme un angle plus à plat, c'est-à-dire plus proche d'un plan longitudinal et transversal, que l'orientation verticale de l'au moins un orifice de projection, afin de pouvoir projeter plus loin le fluide de nettoyage par l'au moins un élément de projection additionnel. Par exemple, l'orientation verticale de l'au moins un élément de projection additionnel est définie par un angle compris entre -30° et 10° par rapport à une direction transversale perpendiculaire à la direction longitudinale.

Selon une caractéristique de l'invention, l'orientation de l'au moins un orifice de projection diffère de l'orientation de l'élément de projection additionnel vu en projection dans un plan de coupe du balai longitudinal et transversal, c'est-à-dire vu en projection sur un plan perpendiculaire à un plan médian longitudinal de la lame d'essuyage et comprenant à la direction d'allongement longitudinal du balai d'essuyage. En d'autres termes, dans un plan sensiblement parallèle à la surface vitrée à nettoyer, l'orientation longitudinale de l'au moins un élément de projection additionnel est notamment plus écartée que l'orientation longitudinale de l'au moins un orifice de projection, pour permettre la projection de fluide de nettoyage sur les côtés du balai.

Selon l'invention, l'au moins un élément de projection additionnel est configuré pour projeter du liquide de nettoyage lorsqu'un pression seuil est atteinte par le liquide de nettoyage dans le canal de circulation.

Selon une caractéristique de l'invention, une section de passage de l'au moins un orifice de projection est plus grande qu'une section de passage de l'au moins un élément de projection additionnel. Conformément à ce qui a été évoqué précédemment, on définit une section de passage moyenne des orifices de projection de la série d'orifices de projection pour tenir compte d'éventuelles tolérances de fabrication d'un orifice de projection à l'autre.

Ainsi, à une première pression du fluide de nettoyage circulant dans le canal de circulation et imposée par le dispositif d'alimentation, l'au moins un orifice de projection permet la projection de fluide de nettoyage alors que l'élément de projection additionnel, du fait de sa section de passage inférieure à la section de passage des orifices de projection de la série d'orifices de projection, ne peut pas le permettre. Seule la zone de visibilité reçoit du fluide de nettoyage, via l'au moins un orifice de projection.

Lorsque le dispositif d'alimentation impose une deuxième pression de fluide de nettoyage qui est plus grande que la première pression précédemment évoquée, l'au moins un orifice de projection permettent toujours la projection de fluide de nettoyage dans la zone de visibilité, mais l'élément de projection additionnel peut désormais également projeter du fluide de nettoyage, ce qui permet alors d'atteindre une zone hors de la zone de visibilité.

Selon une caractéristique de l'invention, l'élément de projection additionnel est équipé d'un clapet configuré pour ne s'ouvrir que sous une pression définie de fluide de nettoyage. Un tel dispositif permet de ne projeter du fluide via l'élément de projection additionnel, c'est-à-dire hors de la zone de visibilité sur des capteurs présents sur les montants de baie, que lorsque le fluide de nettoyage est envoyé dans le canal de circulation correspondant sous une certaine pression.

Dans certains modes de réalisation, l'au moins un élément de projection additionnel comprend au moins un élément d'obturation de la section de passage, l'élément d'obturation étant configuré pour occuper une position d'obturation, fermant la section de passage lorsque la pression dans le canal de circulation est inférieure à la pression seuil, et une position d'ouverture, permettant au liquide de nettoyage d'être projeté via l'élément de projection additionnel lorsque la pression dans le canal de circulation est supérieure ou égale à la pression seuil.

Dans certains modes de réalisation, l'au moins un élément d'obturation est configuré pour passer de la position d'obturation à la position d'ouverture par déformation élastique. Selon une caractéristique de l'invention, le balai d'essuyage comprend une pluralité d'éléments de projection additionnels agencés sur le corps de balai et répartis le long de la direction d'allongement longitudinale du balai d'essuyage. Dans ce contexte, deux éléments de projection additionnels entre lesquels sont disposés des orifices de projection présentent chacun une orientation différente de l'orientation moyenne des orifices de projection de la série d'orifices de projection et les orientations de ces deux éléments de projection additionnels sont différentes l'une de l'autre. De manière alternative ou complémentaire, deux éléments de projection additionnels adjacents, sans orifices de projection interposés entre eux, présentent chacun une orientation différente de l'orientation moyenne des orifices de projection de la série d'orifices de projection et les orientations de ces deux éléments de projection additionnels sont sensiblement équivalentes. En d'autres termes, les éléments de projection additionnels qui sont disposés dans différents endroits du corps de balai sont destinés à projeter du fluide de nettoyage sur des zones du montant de baie qui sont éloignées l'une de l'autre, et ces éléments de projection additionnels présentent une orientation qui leur est propre pour assurer cette projection sur une zone spécifique, tandis que les éléments de projection additionnels qui sont côte à côte participent à projeter du fluide sur une même zone du montant et peuvent donc présenter des orientations similaires, dès lors que cette orientation commune est différente de l'orientation moyenne des orifices de projection de la série d'orifices de projection.

L'invention concerne également un dispositif d'essuyage d'une surface vitrée pour véhicule, notamment automobile, comprenant au moins un balai d'essuyage de la surface vitrée tel que précédemment décrit, l'au moins un orifice de projection étant configuré pour projeter le fluide de nettoyage dans la zone de visibilité formée par la zone de nettoyage de la lame d'essuyage et l'au moins un élément de projection additionnel étant configuré pour projeter le fluide de nettoyage hors de la zone de visibilité de sorte à permettre le nettoyage d'au moins un élément disposé hors de la zone de visibilité.

Le dispositif d'essuyage peut notamment comporter au moins un bras d'entrainement du balai d'essuyage configuré pour que le balai d'essuyage frotte contre la surface vitrée et au moins un dispositif d'alimentation en fluide de nettoyage du balai d'essuyage.

Selon un mode de réalisation, l'élément disposé hors de la zone de visibilité est un capteur.

Selon un mode de réalisation, l'élément disposé hors de la zone de visibilité est agencé sur ou au voisinage d'un montant du véhicule participant à délimiter la surface vitrée. Il convient de comprendre ici que l'élément disposé hors de la zone de visibilité et susceptible d'être nettoyé par le balai d'essuyage spécifique de l'invention peut être agencé sur un montant de baie latéral, participant à délimiter latéralement la surface vitrée, ou sur le bord du pavillon du véhicule participant à délimiter verticalement la surface vitrée. Par l'expression au voisinage d'un montant, il convient de comprendre que l'élément peut être sur ou derrière la surface vitrée, dans toute position dans laquelle l'élément n'est pas essuyé par un système d'essuyage classique.

Par exemple, l'élément disposé hors de la zone de visibilité est agencée dans une position centrale haute du pare-brise. Par exemple, l'élément disposé hors de la zone de visibilité peut être formé avec le pare-brise, ou bien peut comprendre une surface distincte.

Selon un mode de réalisation, le balai d'essuyage est mobile entre une position de repos et une position de fin de course, le dispositif d'essuyage étant configuré pour projeter le fluide de nettoyage hors de la zone de visibilité via l'élément de projection additionnel lorsque le balai d'essuyage est dans une position prédéterminée ou dans un secteur angulaire prédéterminé. La position prédéterminée peut être par exemple la position de fin de course qui est en regard d'un montant de baie du véhicule, et dans laquelle l'axe longitudinal du balai est sensiblement parallèle au montant de baie. Le secteur angulaire peut être défini en fonction de la position et de la largeur de l'élément disposé hors de la zone de visibilité.

L'invention vise également à protéger un véhicule, notamment automobile, comprenant au moins une surface vitrée et au moins un balai d'essuyage présentant au moins une des caractéristiques précédentes.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] La figure 1 est une représentation schématique d'une surface vitrée, maintenue en position latéralement par deux montants de baie de véhicule, et un dispositif d'essuyage de la surface vitrée ;
[fig 2] La figure 2 est une représentation schématique d'un balai du dispositif d'essuyage de la figure 1 en fonctionnement, le balai essuyant la zone de visibilité et les orifices de projection projetant du fluide sur la zone de visibilité ;
[fig 3] La figure 3 est une représentation schématique d'un balai du dispositif d'essuyage de la figure 1 en fonctionnement, le balai étant en regard d'un des montants de baie et deux types de projection de fluide étant opérationnels, l'un pour recouvrir une zone de visibilité sur la surface vitrée et l'autre pour atteindre le montant de baie ;
[fig 4] La figure 3 est une représentation schématique partielle du corps du balai, vue en coupe selon un plan sensiblement parallèle à celui de la surface vitrée, rendant visible une caractéristique d'orientation particulière d'un orifice de projection de fluide selon une aspect de l'invention ;
[fig 5] La figure 5 est une représentation schématique du balai dans son ensemble, vue en coupe selon un plan perpendiculaire à celui de la surface vitrée et perpendiculaire à la direction d'allongement principale du balai ;
[fig. 6] La figure 6 est une représentation schématique d'une surface vitrée ;
[fig. 7] La figure 7 est une représentation du balai comprenant un élément de projection additionnel dans l'embout ;
[fig. 8] La figure 8 est une représentation schématique des orifices de projection d'un élément de projection additionnel selon un mode de réalisation.

Il faut tout d'abord noter que si les figures exposent l'invention de manière détaillée pour sa mise en œuvre, elles peuvent bien entendu servir à mieux définir l'invention le cas échéant. Il est également à noter que, sur l'ensemble des figures, les éléments similaires et/ou remplissant la même fonction sont indiqués par la même numérotation.

Dans ce qui va suivre, les dénominations longitudinale, verticale et transversale sont relatives au balai d'essuyage apte à équiper le dispositif d'essuyage selon l'invention, indépendamment de la position de ce balai et du dispositif d'essuyage sur le véhicule automobile et la surface vitrée qu'il est destiné à nettoyer. Plus particulièrement, la direction longitudinale correspond à la direction d'allongement principal du balai, la direction verticale correspond à la direction d'empilement du corps du balai et de la lame formant les composants principaux du balai et la direction transversale étant perpendiculaire à ces deux directions longitudinale et verticale.

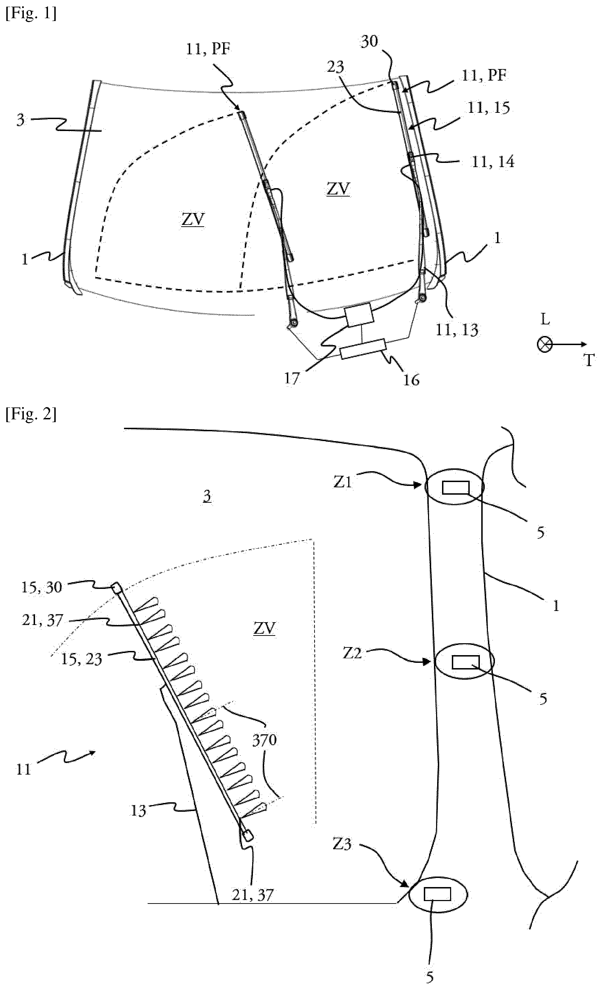

La figure 1 illustre schématiquement des montants de baie 1 d'un véhicule qui sont disposés latéralement de part et d'autre d'une surface vitrée 3.

La surface vitrée 3 permet de protéger un habitacle du véhicule ainsi que ses éventuels occupants des conditions environnementales telles que le vent, la pluie ou encore la projection de corps étrangers. Des détecteurs peuvent être placés dans l'habitable derrière la surface vitrée 3 ou être intégrés directement dans celle-ci. Le détecteur peut être par exemple un LIDAR ou un détecteur de pluie ou encore une caméra.

Dans l'exemple illustré, la surface vitrée 3 est un pare-brise avant et les montants de baie sont des montants avants du véhicule. Alternativement, la surface vitrée peut être une lunette arrière du véhicule ou une vitre latérale du véhicule, les montants de baie pouvant alors être des montants arrières ou des montants latéraux du véhicule.

En référence à la figure 1, au moins un capteur 5 est agencé sur un des montants de baie 1 maintenant la surface vitrée 3. Le capteur 5 peut faire partie d'un système d'aide à la conduite configuré pour faciliter les manœuvres du véhicule et/ou augmenter la sécurité du véhicule. Le capteur 5 est par exemple un capteur optique, une caméra, un système LIDAR, un système radar ou encore un télémètre à ultrason.

Dans l'exemple représenté sur les figures, le véhicule comprend une pluralité de capteurs 5 respectivement agencés sur un des montants de baie 1 entourant le pare-brise du véhicule et qui sera par la suite référencé montant de baie avant 1 du véhicule. Les capteurs sont disposés en différentes zones de ce montant de baie avant et plus particulièrement ici dans trois zones Z1, Z2, Z3. Chaque zone Z1, Z2, Z3 est à distance non nulle des autres zones.

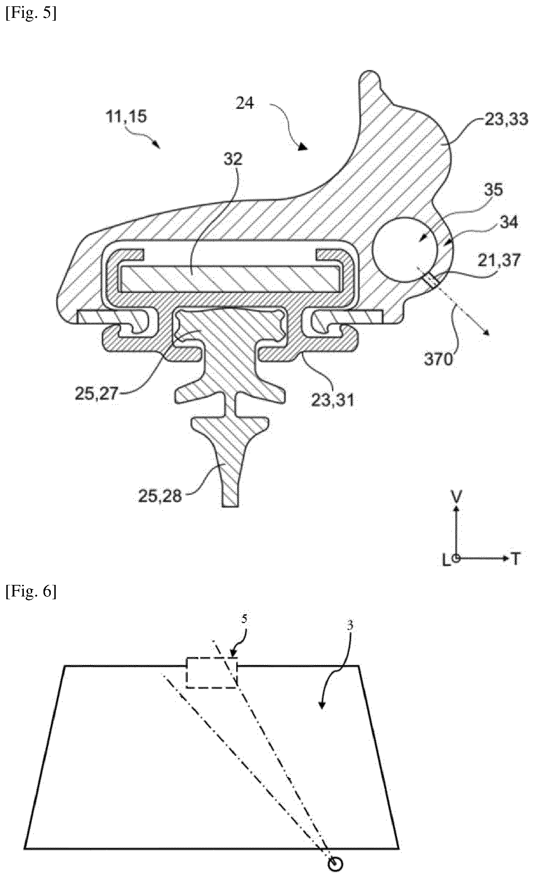

Selon un autre mode de réalisation, représenté en figure 6, le capteur 5 peut être disposé au moins partiellement au-dessus de la surface vitrée 3, par exemple dans une position centrale par rapport à celui-ci.

Le véhicule comprend au moins un dispositif d'essuyage 11 de la surface vitrée 3. Le dispositif d'essuyage 11 comprend au moins un bras 13 et au moins un balai d'essuyage 15 attaché au bras 13 via un connecteur 14. Le bras 13 est configuré pour effectuer un mouvement de va-et-vient qui peut être linéaire et/ou angulaire, ce mouvement étant commandé par un système de gestion électronique 16 du dispositif d'essuyage. Le dispositif d'essuyage 11 est configuré pour que le balai 15 soit plaqué sur la surface vitrée tout au long du mouvement de va-et-vient du bras 13.

Le déplacement du bras 13 et du balai d'essuyage 15 est effectué entre deux positions de fin de course parmi lesquelles une première position de fin de course et une deuxième position de fin de course PF.

La première position de fin de course est située au voisinage du capot de la voiture. La première position de fin de course peut par exemple correspondre à une position de repos lorsque le dispositif d'essuyage 11 n'est pas utilisé et que le balai est au moins en partie escamoté sous la partie supérieure du capot avant du véhicule. La deuxième position de fin de course PF est située au voisinage d'un des montants de baie 1 de la voiture.

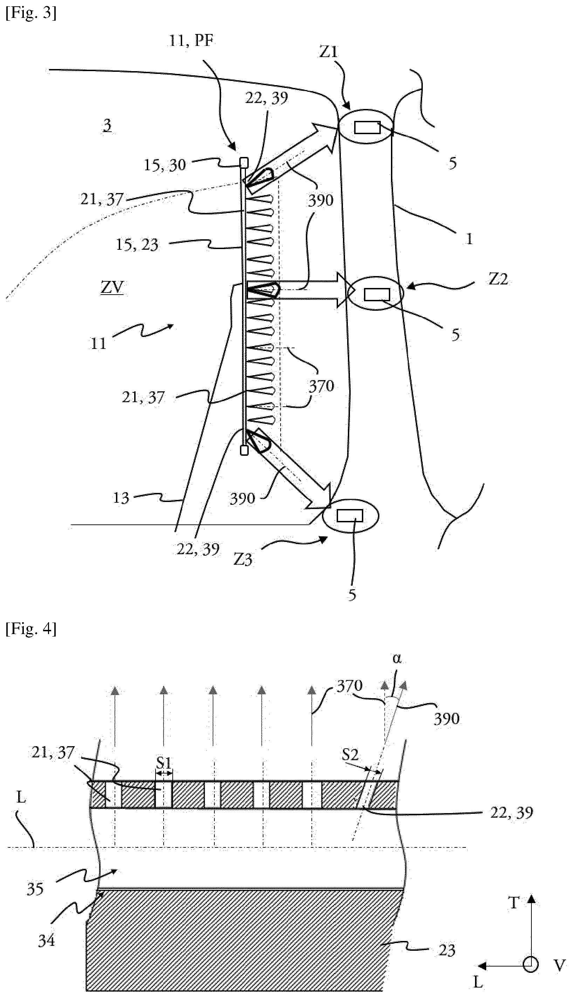

Tel que cela est visible sur les figures 2 et 3 notamment, le passage du balai de la première position de fin de course et la deuxième position de fin de course définit une zone de visibilité ZV, que le dispositif d'essuyage 11 doit maintenir propre pour la sécurité de la conduite.

Le dispositif d'essuyage 11 comprend un dispositif d'alimentation 17 en fluide de nettoyage et des moyens de projection 19, embarqués sur le balai du dispositif d'essuyage et configurés pour projeter le fluide de nettoyage sur la surface vitrée et/ou en dehors de la surface vitrée. Plus particulièrement, selon l'invention, le balai d'essuyage 15 du dispositif d'essuyage comporte des premiers moyens de projection 21 qui configurés pour projeter le fluide de nettoyage dans la zone de visibilité ZV, et des deuxièmes moyens de projection 22 qui sont configurés pour projeter le fluide de nettoyage hors de la zone de visibilité et notamment sur l'un des montants de baie avant 1.

Dans l'exemple illustré, le balai d'essuyage 15 s'étend principalement le long d'un axe longitudinal L et il comporte un corps de balai 23 et une lame d'essuyage 25 portée par ce corps de balai 23. La lame d'essuyage 25 présente notamment un talon 27, apte à loger dans une cavité de réception formée dans le corps de balai 23, et une lèvre 28 destinée à être en contact avec la surface vitrée à nettoyer. La lame d'essuyage 25 permet de définir une direction verticale V du balai, cette direction verticale correspondant à la direction d'extension de la lame allant de la lèvre au talon, et de définir de la sorte une direction verticale perpendiculaire à la direction longitudinale et à la direction transversale.

Le corps de balai23 comprend un déflecteur 24 et, à ses extrémités longitudinales, des embouts 30 qui sont configurés pour maintenir ensemble le déflecteur 24 et la lame d'essuyage 25.

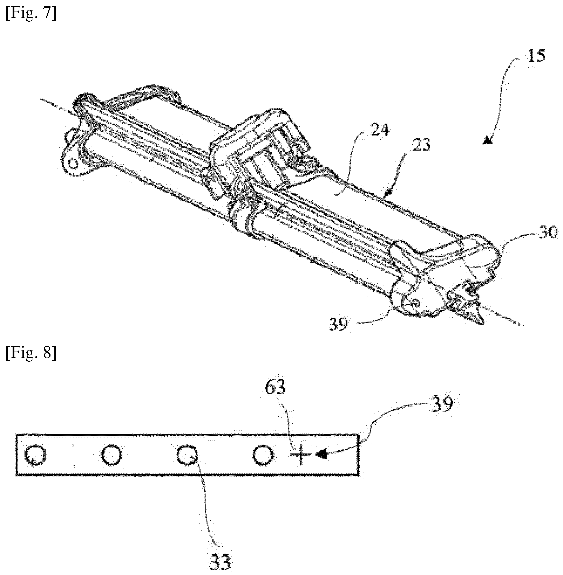

Le déflecteur 24 comporte principalement un support 31, dans lequel est formée la cavité de réception pour la réception du talon de la lame d'essuyage 25, et un élément de déflexion d'air 33. Par exemple les moyens de projection de fluide de nettoyage précédemment évoqués, aussi bien les premiers que les deuxièmes moyens, sont portés par le déflecteur 24, c'est-à-dire soit par le support 31, soit par l'élément de déflexion d'air 33, soit par l'un des embouts, comme cela est représenté sur la figure 7. Dans les exemples illustrés, les moyens de projection sont formés dans l'élément de déflexion d'air 33, mais il convient de comprendre que sans sortir du contexte de l'invention, le volume du support 31 pourrait être plus important que celui de l'élément de déflexion d'air et permettre que les moyens de projection soient portés par le support plutôt que par l'élément de déflexion d'air.

Le support 31 est configuré pour porter la lame d'essuyage, pour loger au moins une vertèbre de rigidification 32, dont la flexibilité permet de plaquer le balai et la lame d'essuyage contre la surface vitrée, et pour permettre la tenue de l'élément de déflexion d'air 33.

Les moyens de projection de fluide sont réalisés dans le corps de balai 23 de manière à communiquer fluidiquement avec au moins une portion tubulaire 34 délimitant en son sein un canal de circulation 35 du fluide de nettoyage, la portion tubulaire 34 étant reliée au dispositif d'alimentation 17.

Les moyens de projection comportent au moins une série d'orifices de projection 37 du liquide de nettoyage qui est configurée pour projeter le fluide de nettoyage sensiblement dans la zone de visibilité, formant les premiers moyens de projection 21 précédemment évoqués. Et ils comportent par ailleurs au moins un élément de projection additionnel 39, formant les deuxièmes moyens de projection 22, qui présente une configuration particulière, au moins dans son orientation par rapport à une orientation moyenne des orifices de projection de la série d'orifices de projection formant les premiers moyens de projection.

Cette configuration particulière sera décrite plus en détails ci-après, en référence aux figures 4 à 6 notamment. Dans un premier temps, la fonction de cette configuration particulière va être décrite en référence aux figures 2 et 3.

La figure 2 illustre le dispositif d'essuyage au cours de son mouvement de va-et-vient, dans une position intermédiaire comprise entre la première position de fin de course et la deuxième position de fin de course, tandis que la figure 3 illustre le dispositif d'essuyage dans la deuxième position de fin de course, en regard du montant de baie dans lequel sont disposés des capteurs.

Ces figures illustrent en outre la zone de visibilité définie sur la surface vitrée par le passage du balai entre les deux positions de fin de course, ainsi que les zones Z1 à Z3 dans lesquelles des capteurs présents dans le montant de baie sont disposés.

Le système de gestion électronique 16 du dispositif d'essuyage et le dispositif d'alimentation 17 sont configurés pour envoyer le fluide dans les moyens de projection additionnels de façon optimisée selon les conditions de roulage et selon le cas échéant les besoins en nettoyage des éléments. Plus particulièrement, le système de gestion électronique est configuré pour intégrer les paramètres de vitesse du véhicule et de vitesse du système d'essuyage pour définir le pilotage optimal des moyens de projection additionnels.

A titre d'exemple, le système de gestion électronique 16 du dispositif d'essuyage et le dispositif d'alimentation 17 sont configurés pour que lors du mouvement du balai en direction de la deuxième position de fin de course PF, le fluide de nettoyage soit projeté par les premiers moyens de projection 21, c'est-à-dire les orifices de projection de la série d'orifices de projection 37, sur la zone de visibilité ZV, en amont du passage du balai. Dans les différentes positions intermédiaires qui se succèdent jusqu'à atteindre la deuxième position de fin de course PF, seuls les premiers moyens de projection 21 sont aptes à projeter du fluide de nettoyage. Les jets en sortie des orifices de projection 37 s'étendent principalement perpendiculairement au balai du dispositif d'essuyage 11, et à une distance définie du balai, en amont du passage de balai et dans la zone de visibilité, de manière à ce que le fluide de nettoyage soit ensuite essuyé par le passage du balai. Les orifices de projection 37 de la série d'orifices de projection 37sont disposés sur un même canal de circulation 35 et sont configurés pour que du fluide de nettoyage circulant dans ce canal de circulation 35 sortent simultanément par chacun des orifices de projection 37 de la série d'orifices de projection 37 pour arroser la zone de visibilité sur toute la dimension longitudinale du balai. Il convient de noter qu'il est à ce stade préjudiciable de projeter du fluide de nettoyage par le ou les éléments de projection additionnels 39, car le fluide de nettoyage n'atteindrait pas le montant de baie et les zones dans lesquelles les capteurs sont disposés, et que ce fluide serait projeté hors de la zone de visibilité et non directement essuyé par le passage du balai. Une consommation inutile de fluide de nettoyage serait réalisée.

Selon l'invention, le système de gestion électronique 16 du dispositif d'essuyage et le dispositif d'alimentation 17 sont configurés pour que lorsque le balai est dans la deuxième position de fin de course PF, ou bien lorsque le balai est proche de cette deuxième position de fin de course, le fluide de nettoyage puisse être projeté cette fois par les deuxièmes moyens de projection 22, c'est-à-dire le ou les éléments de projection additionnels 39. Dans l'exemple illustré, du fluide de nettoyage est également projeté, simultanément, par les premiers moyens de projection 21, c'est-à-dire les orifices de projection 37 de la série d'orifices de projection 37. Sans sortir du contexte de l'invention, on pourrait prévoir que les orifices de projection soient équipés d'un dispositif de blocage du passage de fluide, qui est activé dans cette deuxième position de fin de course pour que seuls les deuxièmes moyens de projection 22 soient aptes à projeter du fluide de nettoyage.

Tel qu'illustré, les jets en sortie des éléments de projection additionnels 39 s'étendent selon une direction différente de la direction perpendiculaire au balai, et/ou à distance plus importante du balai que les jets en sortie des orifices de projection. A titre d'exemple non limitatif, au moins un élément de projection additionnel 39 est disposé à une extrémité longitudinale de la série d'orifices de projection 37 formés dans le corps de balai 23 et cet élément de projection additionnel 39 est configuré pour projeter le fluide de nettoyage selon un sens qui va en s'éloignant des jets en sortie des orifices de projection. Dans l'exemple illustré, deux éléments de projection additionnels 39 sont disposés chacun à une extrémité longitudinale du balai, en étant disposés de la sorte de part et d'autre de la série d'orifices de projection 37 formés dans le corps de balai 23, et chacun de ces éléments de projection additionnels 39 est configuré pour projeter le fluide de nettoyage selon un sens qui va en s'éloignant des jets en sortie des orifices de projection, et donc en s'éloignant aussi du jet en sortie de l'autre élément de projection additionnel. On permet ainsi d'arroser et de nettoyer des capteurs qui sont disposés à des extrémités du montant de baie, dans des zones Z1, Z3 qui ne sont pas en regard du balai lorsque le dispositif d'essuyage est dans la deuxième position de fin de course. Dans ce cas, on parle d'orientation angulaire longitudinale particulière des éléments de projection additionnels qui diffère de l'orientation angulaire longitudinal, sensiblement perpendiculaire au balai, des orifices de projection formant les premiers moyens de projection.

Tel que cela sera décrit plus en détails en référence à la figure 5, un élément de projection additionnel 39, ici au centre du balai, peut présenter une orientation angulaire longitudinale similaire à celle des orifices de projection 37 de la série d'orifices de projection 37, c'est-à-dire une orientation perpendiculaire à la direction longitudinale du balai, mais en se différentiant de l'orientation moyenne des orifices de projection 37 en ce que l'orientation angulaire verticale est différente, notamment pour pouvoir projeter plus loin sur la surface vitrée le fluide de nettoyage et atteindre le montant de baie lorsque le balai est dans la deuxième position de fin de course PF.

Dans ce mode de réalisation, les éléments de projection additionnels 39 sont disposés sur le même canal de circulation 35 que les orifices de projection 37 de la série d'orifices de projection 37, de sorte que le fluide de nettoyage circulant dans ce canal 35 est apte à rencontrer aussi bien les premiers moyens de projection 21 que les deuxièmes moyens de projection 22. Toutefois tel qu'évoqué précédemment, la projection de fluide de nettoyage par les deuxièmes moyens de projection 22 n'a lieu qu'à l'approche du montant de baie 1, c'est-à-dire qu'à l'approche des zones de capteurs à nettoyer hors de la zone de visibilité de la surface vitrée, pour des questions d'économie de fluide de nettoyage notamment.

Des moyens appropriés sont mis en œuvre pour réaliser cette fonctionnalité dans ce contexte. Plus particulièrement, un pilotage approprié du dispositif d'alimentation 17, via le système de gestion électronique 16, permet de fournir le fluide de nettoyage à différentes pressions selon la position du dispositif d'essuyage. Jusqu'à atteindre la deuxième position de fin de course PF, ou une position proche de cette deuxième position de fin de course PF, le dispositif d'alimentation 17 fournir un fluide de nettoyage à une première valeur de pression. Les premiers moyens de projection sont configurés pour autoriser le passage de fluide à cette première valeur de pression, alors que les deuxièmes moyens de projection sont configurés pour bloquer le passage de fluide à cette première valeur de pression.

A titre d'exemple, et tel que cela est illustré sur la figure 4 notamment, une section de passage S1 des orifices de projection 37 de la série d'orifices de projection formant les premiers moyens de projection est plus grande qu'une section de passage S2 de chacun des éléments de projection additionnels formant les deuxièmes moyens de projection.

Ainsi, lorsque le fluide de nettoyage est à une première valeur de pression, les orifices de projection 37 permettent la projection de fluide de nettoyage alors que l'élément de projection additionnel 39, du fait de sa section de passage inférieure à la section de passage des orifices de projection de la série d'orifices de projection, ne peut pas le permettre. Seule la zone de visibilité ZV reçoit du fluide de nettoyage, via les orifices de projection de la série d'orifices de projection 37 formant les premiers moyens de projection 21.

Lorsque le dispositif d'alimentation impose au fluide de nettoyage une deuxième valeur de pression qui est plus grande que la première valeur de pression, les orifices de projection 37 de la série d'orifices de projection permettent toujours la projection de fluide de nettoyage devant le balai, dans la zone de visibilité ZV, mais l'élément de projection additionnel 39 peut désormais également projeter du fluide de nettoyage, ce qui permet alors d'atteindre une zone hors de la zone de visibilité.

La différence de section de passage est un des moyens qui peut être mis en œuvre pour permettre le blocage du fluide par les deuxièmes moyens de projection jusqu'à atteindre une position proche de la position de fin de course. A titre d'exemple, une alternative peut être obtenue en équipant l'élément de projection additionnel d'un clapet configuré pour ne s'ouvrir que lorsque, pour reprendre l'exemple précédemment décrit, le dispositif d'alimentation est commandé pour fournir dans le balai un fluide de nettoyage à une pression équivalente à la deuxième valeur de pression évoquée.

La figure 8 représente une alternative dans laquelle l'élément de projection additionnel 39 comprend un élément d'obturation 63 configuré pour occuper une position d'obturation dans laquelle l'élément d'obturation obture la section de passage de l'élément de projection additionnel à la première valeur de pression du fluide et une position d'ouverture dans laquelle l'élément d'obturation est configuré pour dégager au moins partiellement la section de passage de l'élément d'obturation à la deuxième pression du fluide. Ici, l'élément d'obturation 63 est configuré pour passer de la position d'obturation à la position d'ouverture par déformation élastique.

Afin de permettre la projection de fluide de nettoyage dans la zone appropriée, chaque orifice de projection 37, ainsi que les éléments de projection additionnels 39, sont formés dans une portion tubulaire 34 du corps de balai 23, de manière à déboucher à une extrémité dans le canal de circulation de fluide de nettoyage, avec une orientation distincte entre les orifices de projection formant les premiers moyens de projection et le ou les éléments de projection additionnels formant les deuxièmes moyens de projection. Plus particulièrement, les orifices de projection 37 et les éléments de projection additionnels 39 peuvent consister des trous percés dans le corps de balai 23, et délimités par de la matière constituant le corps du balai 23.

L'orientation de chacun de ces orifices de projection 37 est définie par un axe d'allongement 370 et par l'angle défini entre cet axe d'allongement et un axe de référence. Plus particulièrement, l'orientation longitudinale de chacun des orifices de projection est définie en considérant, dans un plan sensiblement parallèle à la surface vitrée à nettoyer, ou encore dans un plan de coupe du balai longitudinal et transversal, tel qu'illustré sur la figure 3, l'angle entre l'axe d'allongement 370 correspondant et une droite perpendiculaire à l'axe longitudinal du canal de circulation 35 de fluide.

Et l'orientation verticale de chacun des orifices de projection est définie en considérant, dans un plan sensiblement perpendiculaire à la direction d'allongement longitudinal du balai, c'est-à-dire dans un plan de coupe du balai longitudinal et transversal, tel qu'illustré sur la figure 4, l'angle entre l'axe d'allongement correspondant et un plan perpendiculaire à une droite perpendiculaire à l'axe longitudinal du canal de circulation de fluide.

L'axe d'allongement 370 est défini comme l'axe passant par le centre de la section de passage au niveau de la jonction de l'orifice de projection 37 et du canal de circulation 35 et par le centre de la section de passage au niveau de la jonction entre l'orifice de projection 37 et la surface externe du corps de balai 23. Dans l'exemple illustré, avec des orifices de projection qui sont tous formés par un perçage dans l'épaisseur du corps de balai, l'axe d'allongement 370 consiste en un axe de révolution de l'orifice correspondant.

Les axes d'allongement 370 des orifices de projection 37 formant les premiers moyens de projection 21 sont sensiblement parallèles entres eux et non confondus. Il peut être déduit de l'orientation angulaire, respectivement longitudinale et verticale, de l'ensemble des axes d'allongement 370 des orifices de projection 37 une orientation moyenne, respectivement longitudinale et verticale, des orifices de projection de fluide, qui peut différer le cas échéant de quelques degrés ou dixièmes de degrés par rapport à chacun des axes d'allongement pour tenir compte des jeux de fabrication notamment.

Par exemple, l'au moins un élément de projection additionnel 39, qui forme les deuxièmes de projection 22 configurés pour projeter le fluide de nettoyage hors de la zone de visibilité tel que précédemment évoqué, de sorte à pouvoir nettoyer un élément agencé hors de la zone de visibilité, est formé dans le corps de balai 23 de manière à présenter une orientation angulaire, longitudinale et/ou verticale, différente de l'orientation moyenne correspondantes des orifices de projection 37 formant les premiers moyens de projection 21.

Notamment, pour les éléments de projection additionnels disposés à une extrémité longitudinale du balai, la différence d'orientation peut être relative à l'orientation angulaire longitudinale des différents moyens de projection. Tel que cela est visible sur la figure 4, un angle d'écartement longitudinal α est formé entre l'axe d'allongement 390 d'un élément de projection additionnel 39 et l'axe représentatif de l'orientation moyenne des axes d'allongement 370 des orifices de projection 37. A titre d'exemple non limitatif, cet angle d'écartement peut être de l'ordre d'au moins 10° pour que la différence d'orientation du jet de fluide de nettoyage par ces éléments de projection additionnels soit significative et permettre d'atteindre des zones Z1, Z3 du montant de baie pour lesquelles le balai du dispositif d'essuyage n'est pas en regard.

Pour les éléments de projection additionnels disposés au centre du balai, et de manière complémentaire pour ces éléments de projection additionnels disposés à une extrémité longitudinale du balai, la différence d'orientation peut être relative à l'orientation angulaire verticale des différents moyens de projection, tel que cela va être décrit ci-après en référence à la figure 5notamment.

Il convient de noter que la figure 4 n'est qu'une représentation partielle de la dimension longitudinale du corps du balai et que d'autres orifices de projection peuvent être présents, et qu'également d'autres éléments de projection additionnels peuvent être présents. Tel que cela est visible sur la figure 3 notamment, par la représentation qui a été faite de la projection de fluide de nettoyage hors de la zone de visibilité en direction de capteurs agencés sur le montant de baie, le dispositif d'essuyage comprend avantageusement une pluralité d'éléments de projection additionnels agencés sur le corps de balai et répartis le long de l'axe de longitudinal du balai d'essuyage. Ces éléments de projection additionnels peuvent présenter des orientations angulaires, longitudinale et/ou verticale, qui sont les mêmes d'un élément de projection additionnel à l'autre, ou qui au contraire varient selon leur position sur le balai pour atteindre telle ou telle zone sur un montant de baie, dès lors que chaque élément de projection additionnel présente conformément à l'invention une orientation différente de l'orientation moyenne des orifices de projection formant les premiers moyens de projection.

La figure 5 illustre une vue en coupe, selon un plan vertical et transversal, perpendiculaire à la direction d'allongement longitudinale du balai, d'un premier mode de réalisation du dispositif d'essuyage tel qu'il vient d'être évoqué, avec les premiers moyens de projection et les deuxièmes moyens de projection qui sont disposés dans le même canal de circulation, la vue en coupe ne permettant de rendre visible qu'un orifice de projection.

Par exemple, au moins un élément de projection additionnel peut présenter une orientation angulaire verticale différente de celle des orifices de projection formant les premiers moyens de projection, vu dans un plan transversal et vertical, perpendiculaire à la direction longitudinale du balai du dispositif d'essuyage.

Par ailleurs, dans l'illustration de ce mode réalisation, comme pour le précédent, la portion tubulaire et les différents moyens de projection sont formés dans l'élément de déflexion d'air 33, mais il convient de rappeler que ces composants de l'invention pourraient être formés avec le même résultat dans le support de lame, dès lors qu'ils sont formés dans le déflecteur, entre les embouts.

L'invention, telle qu'elle vient d'être décrite, atteint bien le but qu'elle s'était fixée, et permet de proposer un dispositif d'essuyage qui combine des moyens de projection destinés au nettoyage d'une surface vitrée du véhicule automobile et des moyens de projection destinés au nettoyage de capteurs embarqués dans un montant de baie bordant cette surface vitrée. Des variantes non décrites ici pourraient être mises en œuvre sans sortir du contexte de l'invention, dès lors que, conformément à l'invention, elles comprennent des moyens de projection dont l'orientation au sein du corps du balai permet de générer ces différentes zones de projection, à savoir une zone de la surface vitrée directement en amont du balai et destinée à être essuyée par le balai du dispositif d'essuyage, et une zone sur ou au voisinage du montant de baie.

## Revendications

1. Balai d'essuyage comportant un corps de balai (23) s'étendant le long d'une direction d'allongement longitudinal du balai d'essuyage et une lame d'essuyage (25) portée par le corps de balai (23) et configurée pour nettoyer une zone de visibilité (ZV) d'une surface vitrée (3) pour véhicule, notamment automobile, le corps de balai (23) comprenant :
- un canal de circulation (35) du fluide de nettoyage apte à être reliée à un dispositif d'alimentation (17) en fluide de nettoyage du balai d'essuyage (15), et
- au moins un orifice de projection (37) en communication fluidique avec le canal de circulation (35) et configurée pour projeter le fluide de nettoyage dans la zone de visibilité (ZV),
- au moins un élément de projection additionnel (39) configuré pour projeter le fluide de nettoyage dans une zone additionnelle distincte de la zone de visibilité (ZV) de sorte à pouvoir nettoyer un élément (1, 5) agencé hors de la zone de visibilité,
l'au moins un élément de projection additionnel (39) étant en communication fluidique le canal de circulation (35) et est configuré pour être alimenté en fluide de nettoyage via le canal de circulation (35),
**caractérisé en ce que** l'au moins un élément de projection additionnel est configuré pour projeter du liquide de nettoyage lorsqu'une pression seuil est atteinte par le liquide de nettoyage dans le canal de circulation (35).

2. Balai d'essuyage (11) selon la revendication 1, dans lequel une section de passage (S1) de l'au moins un orifice de projection (37) est plus grande qu'une section de passage (S2) de l'au moins un élément de projection additionnel (39).

3. Balai d'essuyage (11) selon la revendication 1, dans lequel l'au moins un élément de projection additionnel comprend au moins un élément d'obturation de la section de passage, l'élément d'obturation étant configuré pour occuper une position d'obturation, fermant la section de passage lorsque la pression dans le canal de circulation est inférieure à la pression seuil, et une position d'ouverture, permettant au liquide de nettoyage d'être projeté via l'élément de projection additionnel lorsque la pression dans le canal de circulation est supérieure ou égale à la pression seuil.

4. Balai d'essuyage (11) selon la revendication 3, dans lequel l'au moins un élément d'obturation est configuré pour passer de la position d'obturation à la position d'ouverture par déformation élastique.

5. Balai d'essuyage (11) selon l'une quelconque des revendications précédentes, dans lequel le corps de balai (23) comprend un élément de déflecteur (24), le canal de circulation, l'au moins un orifice de projection (37) et l'au moins un élément de projection additionnel (39) étant formés dans le déflecteur (24).

6. Balai d'essuyage (11) selon l'une quelconque des revendications précédentes, dans lequel l'orientation de l'au moins un orifice de projection (37) diffère de l'orientation de l'au moins un élément de projection additionnel (39) vu en projection dans un plan sensiblement perpendiculaire à la direction d'allongement longitudinal du balai d'essuyage (15).

7. Balai d'essuyage (11) selon l'une quelconque des revendications précédentes, dans lequel l'orientation de l'au moins un orifice de projection (37) diffère de l'orientation de l'au moins un élément de projection additionnel (39) vu en projection sur un plan perpendiculaire à un plan médian longitudinal de la lame d'essuyage et comprenant la direction d'allongement longitudinal du balai d'essuyage (15).

8. Dispositif d'essuyage (11) d'une surface vitrée (3) pour véhicule, notamment automobile, comprenant au moins un balai d'essuyage (15) de la surface vitrée selon l'une des revendications précédentes, l'au moins un orifice de projection (37) étant configurée pour projeter le fluide de nettoyage dans la zone de visibilité (ZV) formée par la zone de nettoyage de la lame d'essuyage et l'au moins un élément de projection additionnel (39) est configuré pour projeter le fluide de nettoyage hors de la zone de visibilité de la lame d'essuyage de sorte à permettre le nettoyage d'au moins un élément disposé hors de la zone de visibilité.

## Patentansprüche

1. Wischblatt mit einem Wischblattkörper (23), der sich entlang einer Längsausdehnungsrichtung des Wischblatts erstreckt, und einer Wischlippe (25), die vom Wischblattkörper (23) getragen wird und dazu konfiguriert ist, einen Sichtbereich (ZV) einer Glasfläche (3) für ein Fahrzeug, insbesondere ein Kraftfahrzeug, zu reinigen, wobei der Wischblattkörper (23) umfasst:
- einen Strömungskanal (35) für die Reinigungsflüssigkeit, der geeignet ist, mit einer Versorgungseinrichtung (17) für Reinigungsflüssigkeit des Wischblatts (15) verbunden zu werden, und
- mindestens eine Spritzöffnung (37) in fluidischer Verbindung mit dem Strömungskanal (35) und konfiguriert, um die Reinigungsflüssigkeit in den Sichtbereich (ZV) zu spritzen,
- mindestens ein zusätzliches Spritzelement (39), das konfiguriert ist, um die Reinigungsflüssigkeit in einen zusätzlichen Bereich zu spritzen, der vom Sichtbereich (ZV) verschieden ist, um ein außerhalb des Sichtbereichs angeordnetes Element (1, 5) reinigen zu können,
wobei das mindestens eine zusätzliche Spritzelement (39) in fluidischer Verbindung mit dem Strömungskanal (35) steht und konfiguriert ist, um über den Strömungskanal (35)
mit Reinigungsflüssigkeit versorgt zu werden, **dadurch gekennzeichnet, dass** das mindestens eine zusätzliche Spritzelement konfiguriert ist, um Reinigungsflüssigkeit zu spritzen, wenn ein Schwellendruck von der Reinigungsflüssigkeit im Strömungskanal (35) erreicht wird.

2. Wischblatt (11) nach Anspruch 1, bei dem ein Durchgangsquerschnitt (S1) der mindestens einen Spritzöffnung (37) größer ist als ein Durchgangsquerschnitt (S2) des mindestens einen zusätzlichen Spritzelements (39).

3. Wischblatt (11) nach Anspruch 1, bei dem das mindestens eine zusätzliche Spritzelement mindestens ein Verschlusselement des Durchgangsquerschnitts umfasst, wobei das Verschlusselement konfiguriert ist, eine Verschlussstellung einzunehmen, die den Durchgangsquerschnitt schließt, wenn der Druck im Strömungskanal unter dem Schwellendruck liegt, und eine Öffnungsstellung, die es der Reinigungsflüssigkeit ermöglicht, über das zusätzliche Spritzelement gespritzt zu werden, wenn der Druck im Strömungskanal größer oder gleich dem Schwellendruck ist.

4. Wischblatt (11) nach Anspruch 3, bei dem das mindestens eine Verschlusselement konfiguriert ist, durch elastische Verformung von der Verschlussstellung in die Öffnungsstellung überzugehen.

5. Wischblatt (11) nach einem der vorhergehenden Ansprüche, bei dem der Wischblattkörper (23) ein Deflektorelement (24) umfasst, wobei der Strömungskanal, die mindestens eine Spritzöffnung (37) und das mindestens eine zusätzliche Spritzelement (39) im Deflektor (24) ausgebildet sind.

6. Wischblatt (11) nach einem der vorhergehenden Ansprüche, bei dem die Ausrichtung der mindestens einen Spritzöffnung (37) von der Ausrichtung des mindestens einen zusätzlichen Spritzelements (39) abweicht, gesehen in Projektion auf eine Ebene, die im Wesentlichen senkrecht zur Längsausdehnungsrichtung des Wischblatts (15) ist.

7. Wischblatt (11) nach einem der vorhergehenden Ansprüche, bei dem die Ausrichtung der mindestens einen Spritzöffnung (37) von der Ausrichtung des mindestens einen zusätzlichen Spritzelements (39) abweicht, gesehen in Projektion auf eine Ebene, die senkrecht zu einer longitudinalen Mittelebene der Wischlippe ist und die Längsausdehnungsrichtung des Wischblatts (15) enthält.

8. Wischvorrichtung (11) einer Glasfläche (3) für ein Fahrzeug, insbesondere ein Kraftfahrzeug, umfassend mindestens ein Wischblatt (15) der Glasfläche nach einem der vorhergehenden Ansprüche, wobei die mindestens eine Spritzöffnung (37) konfiguriert ist, um die Reinigungsflüssigkeit in den Sichtbereich (ZV) zu spritzen, der durch den Reinigungsbereich der Wischlippe gebildet wird, und das mindestens eine zusätzliche Spritzelement (39) konfiguriert ist, um die Reinigungsflüssigkeit außerhalb des Sichtbereichs der Wischlippe zu spritzen, um die Reinigung mindestens eines außerhalb des Sichtbereichs angeordneten Elements zu ermöglichen.

## Claims

1. A wiper blade comprising a blade body (23) extending along a longitudinal elongation direction of the wiper blade and a wiper rubber (25) carried by the blade body (23) and configured for cleaning a visibility zone (ZV) of a glazed surface (3) for a vehicle, in particular a motor vehicle, the blade body (23) comprising:
- a cleaning fluid circulation channel (35) able to be connected to a cleaning fluid supply device (17) for the wiper blade (15), and
- at least one spray orifice (37) in fluidic communication with the circulation channel (35) and configured to project the cleaning fluid into the visibility zone (ZV),
- at least one additional spray element (39) configured to project the cleaning fluid into an additional zone separate from the visibility zone (ZV) so as to be able to clean an element (1, 5) arranged outside the visibility zone,
the at least one additional spray element (39) being in fluidic communication with the circulation channel (35) and is configured to be supplied with cleaning fluid via the circulation channel (35),
**characterized in that** the at least one additional spray element is configured to project cleaning liquid when a threshold pressure is reached by the cleaning liquid in the circulation channel (35)

2. The wiper blade (11) as claimed in claim 1, wherein a passage cross section (S1) of the at least one spray orifice (37) is larger than a passage cross section (S2) of the at least one additional spray element (39).

3. The wiper blade (11) as claimed in claim 1, wherein the at least one additional spray element comprises at least one closure element for closing the passage cross section, the closure element being configured to occupy a closure position, closing the passage cross section when the pressure in the circulation channel is less than the threshold pressure, and an open position, allowing the cleaning liquid to be projected via the additional spray element when the pressure in the circulation channel is greater than or equal to the threshold pressure.

4. The wiper blade (11) as claimed in claim 3, wherein the at least one closure element is configured to pass from the closure position to the open position by elastic deformation.

5. The wiper blade (11) as claimed in any one of the preceding claims, wherein the blade body (23) comprises a deflector element (24), the circulation channel, the at least one spray orifice (37) and the at least one additional spray element (39) being formed in the deflector (24).

6. The wiper blade (11) as claimed in any one of the preceding claims, wherein the orientation of the at least one spray orifice (37) differs from the orientation of the at least one additional spray element (39) seen in projection in a plane substantially perpendicular to the longitudinal elongation direction of the wiper blade (15).

7. The wiper blade (11) as claimed in any one of the preceding claims, wherein the orientation of the at least one spray orifice (37) differs from the orientation of the at least one additional spray element (39) seen in projection on a plane perpendicular to a longitudinal median plane of the wiper rubber and comprising the longitudinal elongation direction of the wiper blade (15).

8. A device (11) for wiping a glazed surface (3) for a vehicle, in particular a motor vehicle, comprising at least one wiper blade (15) for wiping the glazed surface as claimed in one of the preceding claims, the at least one spray orifice (37) being configured to project the cleaning fluid into the visibility zone (ZV) formed by the cleaning zone of the wiper rubber, and the at least one additional spray element (39) is configured to project the cleaning fluid outside the visibility zone of the wiper rubber so as to permit the cleaning of at least one element arranged outside the visibility zone.
